(19) Europäisches Patentamt
European Patent Office
Office européen des brevets

(11) Publication number: **0 135 903**
**B1**

(12) # EUROPEAN PATENT SPECIFICATION

(45) Date of publication of patent specification: **24.06.87**

(51) Int. Cl.[4]: **C 03 B 37/018,** C 07 C 13/04

(21) Application number: **84111019.0**

(22) Date of filing: **14.09.84**

(54) **Process of manufacturing optical fibres of extremely low loss in the medium infrared.**

(30) Priority: **15.09.83 IT 6795683**

(43) Date of publication of application:
**03.04.85 Bulletin 85/14**

(45) Publication of the grant of the patent:
**24.06.87 Bulletin 87/26**

(84) Designated Contracting States:
**AT BE CH DE FR GB LI NL SE**

(56) References cited:
**US-A-4 378 987**

(73) Proprietor: **CSELT Centro Studi e Laboratori Telecomunicazioni S.p.A.**
**Via Guglielmo Reiss Romoli, 274**
**I-10148 Turin (IT)**

(72) Inventor: **Roba, Giacomo**
**Strada Torino 90/L**
**Beinasco - Torino (IT)**

(74) Representative: **Riederer Freiherr von Paar zu Schönau, Anton et al**
**Freyung 615 Postfach 2664**
**D-8300 Landshut (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 135 903 B1

**Description**

The present invention relates to the industrial production of physical carriers for optical telecommunications systems and more particularly it concerns a process for the fabrication of optical fibres of extremely low loss in the medium infrared.

Various materials exist for which a minimal intrinsic attenuation of the order of $10^{-2}$ to $10^{-4}$ dB/km can be predicted in the spectral region comprised between 2 and 12 µm. They are therefore considered to be suited to the fabrication of extremely low loss optical fibres to be used for transmission systems with widely spaced repeaters, operating in the medium infrared. Yet, materials used to manufacture optical fibres must have various characteristics not only of the optical type: namely high mechanical resistance, chemical and structural stability, low reactivity with the environment.

Among the various materials those whose characteristics more strictly satisfy these requirements are halide glasses and more particularly fluoride glasses having metal fluorides as basic compounds.

Some of the main fluoride compounds will be listed below; they can be used as glass "formers" or as matrix "stabilizers" or "modifiers" to fabricate fluoride glass structures. For such compounds and for their metallic elements and relevant oxides melting temperature $T_f$, boiling temperatures $T_e$, sublimation or decomposition temperature are indicated below, when known.

| | | | | $T_f$(°C) | | | $T_e$(°C) | |
|---|---|---|---|---|---|---|---|---|
| $AlF_3$; | Al; | $Al_2O_3$ | 1291 subl; | 660.2; | 2045 | —; | 2467; | 2980 |
| $BaF_2$; | Ba; | BaO | 1280; | 725; | 1293 | 2173; | 1140; | 2000 |
| $BiF_2$; | Bi; | $Bi_2O_3$ | 727; | 271.3; | 820 | —; | 1560; | 1890 |
| $GaF_3$; | Ga; | $Ga_2O_3$ | 800; | 29.78; | 1900 | 1000; | 2403; | — |
| $GdF_3$; | Gd; | $Gd_2O_3$ | —; | 1312; | — | —; | 3000; | — |
| $HfF_4$; | Hf; | $HfO_2$ | —; | 2150; | 2812 | —; | 5400; | 5400 |
| $LaF_3$; | La; | $La_2O_3$ | —; | 920; | 2315 | —; | 3469; | 4200 |
| LiF; | Li; | $Li_2O$ | 842; | 179; | >1700 | 1676; | 1317; | — |
| NaF; | Na; | $Na_2O$ | 988; | 97.8; | 1275 subl | 1695; | 892; | — |
| $PbF_4$; | Pb; | $PbO_2$ | 855; | 327.5; | 290 dec | 1290; | 1744; | — |
| $ScF_3$; | Sc; | $Sc_2O_3$ | —; | 1539; | — | —; | 2727; | — |
| $TlF_3$; | Tl; | $Tl_2O_3$ | 550 dec; | 303; | 717 | —; | 1457; | 875 dec |
| $ThF_4$; | Th; | $ThO_2$ | >900; | 1700; | 3050 | —; | ~4000; | 4400 |
| $ZnF_2$; | Zn; | ZnO | 872; | 419; | 1975 | 1500; | 907; | — |
| $ZrF_4$; | Zr; | $ZrO_2$ | 600 subl; | 1852; | 2715 | —; | 3578; | — |

Even though glass structures derived from elements of the II Group (Be, Zn, Ba) or of the III Group (Al, Sc, La, Th) may be used, matrices derived from the elements of the IV Group (Hf, Zr) have proved particularly suited for the optical transmission in the medium infrared, ranging from 2 to 6 µm. Fluorohafnate and fluorozirconate glasses, discovered in France in 1976, are in common use and have all the characteristics necessary for a material to be used in the optical telecommunications field.

Nowadays these materials are treated with the same techniques derived from multicomponent glass technology.

Starting from the fluoride compound which has been obtained by chemical reaction with the basic element or its oxide, mixtures are prepared with the various components in the desired concentrations.

Then the annealing, vitrification and possibly purification are effected inside a furnace, in graphite or platinum crucibles. Finally the vitrified material is collapsed into cylindrical rods or in preforms to feed drawing crucibles or to be directly drawn.

All these operations are highly polluting and, above all, do not permit checks on the optical core/cladding interface structure. Hence, for oxide glasses and for halide glasses said direct material treating techniques are not suited to fabricate ultra-low loss optical structures ($10^{-3}$ to $10^{-4}$ dB/Km), with

loss values practically coincident with minimum intrinsic loss values theoretically possible for such materials.

Owing to melting and boiling temperatures of the compounds and elements of TAB1, indirect synthesis techniques such as the traditional CVD processes cannot be used. In fact inorganic compounds of such elements, easy to vaporize at ambient temperature do not exist.

Easy vaporization at ambient temperature is fundamental in the applications of CVD process to optical fibre preform manufacture, since a high temperature for the compound vaporization not only entails considerable complications for deposition plants but does not allow an accurate check of the reaction ambient and then pollution can occur.

It is known (US—A—4378987) to manufacture optical fibres from a glass optical wave guide preform, the material used for the preform fabrication being metal halide glass obtained from vapour phase reactants, i.e. gaseous halogenating agents and organometallic compounds which are volatile, by the reaction obtained inside a supporting tube, made of oxide glass, between the organometallic compound of the element whose halide compound is desired and a gaseous reactant containing the halogen, the halide being fluoride.

In a process of the above kind, use is made, according to the invention, of a particular organometallic compound as is characterized in claim 1, resulting in controllable reactions allowing the manufacturing of high-purity optical fibres by the use of metal halide glasses considering the use of halogens themselves in the reactions with the organometallic compounds. To increase the degree of chemical compatibility between oxide and halide matrices, the glass on the internal surface of the reactor is enriched with halogen by thermal diffusion.

The foregoing and other characteristics of the present invention will become clearer from the following description of a preferred embodiment thereof given by way of non-limiting example.

Organometallic compounds as well as organic compounds, must represent only the carriers in vapour phase at ambient temperature, of the metal whose halide compound is desired. They are not to contain polluting elements or groups, such as OH-groups or transition-metal ions, not even oxygen.

The constraint of lack of oxygen considerably limits the choice of the carrier compound in comparison with the case of oxide glasses. Moreover, reaction products must be gaseous compounds, except obviously the metallic halide so that they might be easily expelled through the same flow of carrier gases.

The requirements demanded above are satisfied by some measures including the use of organometallic compounds of the type:

$$M(C_\gamma H_\delta)_\psi A_\eta \qquad (1)$$

where M represents the metal whose halide compound is to be obtained by reactive synthesis, C is the carbon atom, H is the hydrogen atom, A represents a halogen which can be chlorine or fluorine and symbols γ, δ, ψ and η represent respectively the molecular coefficients of atoms C, H, group CH and atoms A. In presence of fluorine $F_2$ or one of the fluorine compounds: $CCl_2F_2$, $CClF_3$, $CF_4$, HF, and by thermal activation of the organometallic compound, the following synthesis reaction will take place:

$$M(C_\gamma H_\delta)_\psi A_\eta+\psi(\gamma+\delta)F_2\rightarrow MF(\psi+n)+\gamma\psi CF_4+(\delta\psi-\eta)\cdot HF+\eta HA \qquad (2)$$

where $\delta=1+2\gamma$.

In this case a solid halide compound and some volatile compounds ($CF_4$, HF, HA) are produced.

By way of example, the characteristics and the relevant reaction of an aluminium organometallic compound, i.e. diethylaluminium chloride, are given:

$$(C_2H_5)_2\ Al\ Cl\quad T_f(^\circ C)=-50\quad T_e(^\circ C)=87 \text{ at 200 mm. Hg}$$

$$(C_2H_5)_2Al\ Cl+14\ F_2\rightarrow Al\ F_3+4CF_4+9\ HF+HCl$$

Within organometallic compounds (1), compounds can be found which at ambient temperature are in liquid state and then can be easily vaporized, for example by bubbling an inert carrier gas (Ar) through the liquid.

Once chosen the compounds and reactions, the deposition process and preform fabrication can be carried out by applying techniques already known within semiconductor technology as OM—CVD (Organometallic Chemical Vapour Deposition) duly modified to take into account the different symmetry of the product (planar in one case, cylindrical in the other), the different composition and crystalline or vitreous structure, the different chemical and physical properties of materials. Alternatively, the methods typical of differently-doped oxide glass and in particular silica glass fibres can be used.

Inside vapour deposition techniques are suitable, taking into account the purity requirements for these materials to exploit to the maximum their optical properties. Both refractive indices and thermal expansion coefficients as well as glass transition temperatures of the supporting tube are to be matched.

For instance, let us consider an optical fibre whose core and cladding consist of a quaternary compound $ZrF_4$—$BaF_2$—$GdF_3$—$AlF_3$, respectively in the following compositions expressed in molar

percentage 61.8 $ZrF_4$—32.3 $BaF_2$—3.9 $GdF_3$—2 $AlF_3$ with refractive index $n_D$=1.519 and 59.2 · $ZrF_4$—31.0 $BaF_2$—3.8 $GdF_3$—6 $AlF_3$ with refractive index $n_D$=1.514 as described in the paper "Preparation of Low Loss Fluoride Glass Fibers"—S. Mitachi, T. Kanamori, T. Miyashita, Japanese Journal of Applied Physics Vol. 21, No. 1, January, 1982, pp. L55—L56.

The supporting tube, which is used both as a reactor and as external fibre cladding, is composed of multicomponent oxide glass matrices containing sodium-borum-potassium silicates.

Also in this case the reactor glass matrix must meet specific requirements in terms of refractive index, expansion coefficient and glass transition temperature. To increase the degree of chemical compatibility between oxide and fluoride matrices, the glass on the internal surface of the reactor is enriched with fluorine by thermal diffusion.

In this way the double goal is reached of (1) using a reactor with characteristics similar to those of the glass matrices to deposit and which is then apt to offer a suitable support for the deposition and (2) of obtaining an external protecting cladding for the preform, hardly reactive with the environment and then apt to preserve optical chemical and mechanical properties of the inside material.

**Claims**

1. A process for manufacturing optical fibres of extremely low loss in the medium infrared, wherein the material used for the preform fabrication is metal halide glass that is obtained from vapour phase reactants formed by the reaction occurring inside an oxide glass supporting tube between an organometallic compound of the element whose halide compound is desired and a gaseous reactant containing the halogen, and that then is deposited on the inside wall of said supporting tube, characterized in that said organometallic compound is of the type:

$$M(C_\gamma H_\delta)_\psi A_\eta$$

where M represents the metal whose halide compound is to be obtained by reactive synthesis, C is the carbon atom, H is the hydrogen atom, A is a halogen, and symbols, $\gamma$, $\delta$, $\psi$, $\eta$ represent the molecular coefficients of atoms C, H, of group CH and of halogen A respectively;

and the inside surface of said supporting tube is enriched with the halogen by thermal diffusion.

2. Process as in claim 1, characterized in that said halide is fluoride.

3. Process as in claim 2, characterized in that said gaseous reactant containing fluorine is chosen among the following:

$$F_2,\ CCl_2F_2,\ CClF_3,\ CF_4,\ HF.$$

**Patentansprüche**

1. Verfahren zur Herstellung optischer Fasern von extrem niedrigem Verlust im mittleren Infrarot, bei dem für die Vorformherstellung als Material Metallhalogenidglas verwendet wird, das aus in der Dampfphase befindlichen Reaktionsstoffen erhalten wird, die durch die in einem Trägerrohr aus Oxidglas durchgeführte Reaktion zwischen einer organometallischen Verbindung des Elements, dessen Halogenidverbindung hergestellt werden soll, und einem das Halogen enthaltenden gasförmigen Reaktionsstoff gebildet sind, und das dann an der Innenwand des Trägerrohrs niedergeschlagen wird, dadurch gekennzeichnet, daß die organometallische Verbindung von der folgenden Art ist:

$$M(C_\gamma H_\delta)_\psi A_\eta$$

wobei M=das Metall, dessen Halogenidverbindung durch reaktive Synthese herzustellen ist, C=Kohlenstoffatom, H=Wasserstoffatom, A=ein Halogen, und Symbole $\gamma$, $\delta$, $\psi$, $\eta$=Molekularkoeffizienten der Atome C, H, der Gruppe CH bzw, des Halogens A; und die Innenfläche des Trägerrohs durch thermische Diffusion mit dem Halogen angereichert wird.

2. Verfahren nach Anspruch 1, dadurch gekennzeichnet, daß das Halogenid Fluorid ist.

3. Verfahren nach Anspruch 2, dadurch gekennzeichnet, daß der gasförmige Reaktionsstoff, der Fluor enthält, ausgewählt wird aus $F_2$, $CCl_2F_2$, $CClF_3$, $CF_4$, HF.

**Revendications**

1. Procédé pour la fabrication de fibres optiques à très faible atténuation dans le moyen infrarouge, où le matériau employé pour la production de la préforme est du verre ayant comme base des halogénures de métaux, qui est obtenu par des réactifs en phase vapeur produits par la réaction déclenchée à l'intérieur d'un tube de support réalisé en verre à base d'oxyde entre un composé organométallique de l'élément dont on désire obtenir le composé halogénure et un réactif gazeux qui contient l'halogène, et qui est puis déposé sur la surface interne dudit tube de support, caractérisé en ce que ledit composé organométallique est du type:

$$M(C_\gamma H_\delta)_\psi A_\eta$$

où M représente le métal dont un veut obtenir le composé halogénure par synthèse réactive, C est l'atome de carbone, H est l'atome d'hydrogène, A est un halogène et les symboles $\gamma$, $\delta$, $\psi$, $\eta$ représentent respectivement les coefficients de présence en molécule des atomes C, H, du groupement CH et de l'halogène A; et la surface interne dudit tube de support est enrichie de l'halogène par diffusion thermique.

2. Procédé suivant la revendication 1, caractérisé en ce que ledit halogènure est fluorure.

3. Procédé suivant la revendication 2, caractérisé en ce que ledit réactif gazeux qui contient du fluor est choisi entre les suivants:

$$F_2,\ CCl_2F_2,\ CClF_3,\ CF_4,\ HF.$$